# EUROPÄISCHE PATENTSCHRIFT

(11) **EP 3 685 349 B1**
(45) Veröffentlichungstag und Bekanntmachung des Hinweises auf die Patenterteilung: **04.06.2025**
(21) Anmeldenummer: 18769145.6
(22) Anmeldetag: 11.09.2018
(51) Int. Cl.: G06T 7/00, G06T 7/60

(54) **VERFAHREN ZUR ERKENNUNG EINER GEOMETRIE EINES TEILBEREICHS EINES OBJEKTS**
METHOD FOR RECOGNIZING THE GEOMETRY OF A PORTION OF AN OBJECT
PROCÉDÉ DE DÉTECTION D'UNE GÉOMÉTRIE D'UNE ZONE PARTIELLE D'UN OBJET

(30) Priorität: 22.09.2017 DE 102017122063
(43) Veröffentlichungstag der Anmeldung: 29.07.2020
(73) Patentinhaber: Volume Graphics GmbH, 69115 Heidelberg (DE)
(72) Erfinder: WENZEL, Nicolas, 69115 Heidelberg (DE); RAZMYSLOVICH, Dzmitry, 69115 Heidelberg (DE); RHEIN, Markus, 69115 Heidelberg (DE)
(74) Vertreter: Patentanwälte Olbricht Buchhold Keulertz
(86) Internationale Anmeldenummer: PCT/EP2018/074442
(87) Internationale Veröffentlichungsnummer: WO 2019/057549

(56) Entgegenhaltungen:
- DE-A1- 19 914 862
- AHN S J ET AL: "Automatic segmentation and model identification in unordered 3D-point cloud", VISUAL COMMUNICATIONS AND IMAGE PROCESSING; 20-1-2004 - 20-1-2004; SAN JOSE,, vol. 4902, 1 January 2002 (2002-01-01), pages 723 - 733, XP002488293, ISBN: 978-1-62841-730-2, DOI: 10.1117/12.467726
- KROLL ET AL.: "New Solutions for industrial inspection based on 3D computer tomography", OPTICAL AND DIGITAL IMAGE PROCESSING, vol. 7000, no. 7000006, 1 January 2008 (2008-01-01), pages 1 - 12, XP040438765, DOI: 10.1117/12.781386

## Beschreibung

Die Erfindung betrifft ein computer-implementiertes Verfahren zur Erkennung einer Geometrie eines Teilbereichs eines Objekts gemäß dem Oberbegriff von Anspruch 1, sowie ein Computerprogrammprodukt nach Anspruch 10.

Die dimensionelle Messtechnik befasst sich generell mit der Aufgabe, aus einer digitalen Darstellung eines Objekts Eigenschaften, wie beispielsweise Bemaßungen bestimmter Teilgeometrien des Objekts, zu ermitteln. Hierzu ist es im Stand der Technik bekannt, die digitale Darstellung des Objekts zu segmentieren, sodass die jeweils zu einer Teilgeometrie gehörenden Bildpunkte der digitalen Darstellung gruppiert werden können. Aus den so erhaltenen Segmentierungen der Objektdarstellung können dann durch Einpassung einer Referenzgeometrie die entsprechenden Dimensionen der Geometrie ermittelt werden. Auf diese Weise kann beispielsweise für ein Objekt, welches eine Vielzahl von Bohrungen, Kanten, Extrusionen oder weiteren Geometrien aufweist, genau bestimmt werden, welche Dimensionen diese Geometrien aufweisen und ob die entsprechenden Dimensionen mit einer Vorgabe, welche bei der Erzeugung des Objekts zu berücksichtigen war, übereinstimmt. So kann beispielsweise eine Werkstückprüfung mittels einer tomographischen oder optischen Messung eines Werkstücks und anschließender Auswertung der gewonnen digitalen Objektdarstellung realisiert sein.

Aus Ahn et al. "Automatic segmentation and model identification in unordered 3D-point cloud", Visual communications and image processing; Bd. 4902, 01.01.2002, Seiten 723-733 ist bekannt, eine 3-D Punktewolke eines Objekts zu ermitteln und diese auf einem Anzeigemittel darzustellen. Weiter wird eine erste Nutzereingabe empfangen, wobei die Nutzereingabe eine erste Position in der 3-D Punktewolke als Startpunkt spezifiziert. Es wird eine erste Menge von Bildpunkten in der Umgebung des Startpunktes ermittelt, wobei die erste Menge von Bildpunkten die Geometrie des Teilbereichs im Bereich des Startpunkts abbildet. Weiter wird eine Prüf-Geometrie anhand der ersten Menge von Bildpunkten durch Anpassen eines Geometrieelements an die Bildpunkte der ersten Menge von Bildpunkten ermittelt. Schließlich wird eine zweite Menge von Bildpunkten in der Umgebung des Startpunkts, wobei die zweite Menge von Bildpunkten die Geometrie des Teilbereichs im Bereich der Prüf-Geometrie abbildet, ermittelt. Weiter ist aus DE 199 14 862 A1 ein Verfahren zum Vermessen eines Konturverlaufs eines Werkstücks, insbesondere eines Werkzeuges, mit folgenden Schritten bekannt: Festlegung wenigstens einer Soll-Position eines Konturpunktes des zu vermessenden Konturverlaufs und Eingabe der Soll-Position in eine Recheneinrichtung, Anordnung des Werkstücks derart, daß die Ist-Position des Konturpunktes seiner Soll-Position entspricht, Abfahren des Konturverlaufs mit Konturverlauf-Erfassungsmitteln und Ermittlung einer beliebigen Anzahl von Ist-Positionen von Punkten des Konturverlaufs relativ zu der festgelegten Soll-Position, und Berechnung eines Konturlinienzuges auf der Grundlage der festgelegten Soll-Position und der ermittelten Ist-Positionen. In der Veröffentlichung von Julia Kroll, Ira Effenberger, Alexander Verl, "New solutions for industrial inspection based on 3D computer tomography," Proc. SPIE 7000, Optical and Digital Image Processing, 700006 (25 April 2008) werden Methoden zur effizienten industriellen 3D-CT-Bildverarbeitung vorgestellt.

Zur Erkennung von Teilgeometrien eines Objekts ist es aus dem Stand der Technik bekannt, dass beispielsweise ein Nutzer über eine Schnittstelle eine Menge von Punkten der digitalen Darstellung des Objekts auswählt. Ferner kann durch den Nutzer festgelegt werden, um welche Geometrie-Grundform es sich handelt, also ob ein Zylinder, eine Fläche, eine Kurve, oder eine beliebige andere Form vorliegt. Die ausgewählte Grundform wird dann an die durch den Nutzer selektierten Punkte angepasst und aus der angepassten Grundform eine Analyse der entsprechenden Eigenschaften des Objekts durchgeführt.

Dieser Ansatz hat jedoch den Nachteil, dass eine Vielzahl von Nutzerinteraktionen notwendig ist, um ein zufriedenstellendes Ergebnis zu erhalten. So muss der Nutzer die Geometrie-Grundform und die für die Anpassung zu verwendenden Punkte vorgeben. Dabei wird durch den Nutzer üblicherweise nur eine kleine Teilmenge aller Punkte definiert werden, welche eigentlich die zu vermessende Geometrie abbilden. Folglich liegt aufgrund der geringen Zahl an Messdaten häufig eine unzureichende Statistik vor, sodass ein Messergebnis mit einem vergleichsweise großen Fehler behaftet ist. Weiter wird ein Nutzer üblicherweise nicht bei zwei aufeinanderfolgenden Analysevorgängen immer dieselben Punkte auswählen, sodass auch eine Reproduzierbarkeit der Analyse nicht gegeben ist.

Demgegenüber liegt der vorliegenden Anmeldung die Aufgabe zu Grunde, ein computer-implementiertes Verfahren zur Erkennung einer Geometrie eines Teilbereichs eines Objekts zu schaffen, das die vorgenannten Nachteile des Standes der Technik überwindet.

Hauptmerkmale der Erfindung sind im Anspruch 1 und Anspruch 10 angegeben. Ausgestaltungen sind Gegenstand der Ansprüche 2 bis 9.

In einem ersten Aspekt betrifft die Erfindung ein computer-implementiertes Verfahren nach Anspruch 1 zur Erkennung einer Geometrie eines Teilbereichs eines Objekts in einer dreidimensionalen digitalen Darstellung des Objekts, wobei die digitale Darstellung eine Vielzahl von Bildpunkten aufweist. Die Bildpunkte der digitalen Darstellung stellen wenigstens eine Materialgrenzfläche des Objekts dar. Das Verfahren weist dabei die nachfolgend beschriebenen Schritte auf.

Zunächst wird die Objektdarstellung ermittelt und auf wenigstens einem Anzeigemittel dargestellt. Anschließend wird wenigstens eine erste Nutzereingabe empfangen, wobei die Nutzereingabe wenigstens eine erste Position in der Objektdarstellung als Startpunkt spezifiziert. In der Umgebung des Startpunktes wird dann eine erste Menge von Bildpunkten ermittelt, wobei die erste Menge von Bildpunkten die Geometrie des Teilbereichs im Bereich des Startpunkts abbildet.

Anhand der Bildpunkte der ersten Menge von Bildpunkten wird eine Prüf-Geometrie ermittelt, indem wenigstens ein Geometrieelement an die Bildpunkte der ersten Menge von Bildpunkten angepasst wird. Anschließend wird eine zweite Menge von Bildpunkten in der Umgebung des Startpunkts ermittelt, wobei die zweite Menge von Bildpunkten die Geometrie des Teilbereichs im Bereich der Prüf-Geometrie abbildet. Die zweite Menge von Bildpunkten wird dann in wenigstens eine Zielmenge von Bildpunkten eingefügt und die Bildpunkte der Zielmenge von Bildpunkten werden in der Objektdarstellung auf dem wenigstens einen Anzeigemittel angezeigt.

Anschließend wird eine zweite Nutzereingabe empfangen, die anzeigt, ob die angezeigten Bildpunkte die Geometrie des Teilbereichs des Objekts korrekt wiedergeben. Wenn die zweite Nutzereingabe anzeigt, dass die Geometrie korrekt wiedergegeben ist, wird wenigstens eine Abmessung der Geometrie bestimmt und die Abmessung ausgegeben. Wenn die zweite Nutzereingabe hingegen anzeigt, dass die Geometrie nicht korrekt wiedergegeben ist, werden die vorangegangenen Schritte, welche zur Ermittlung der ersten und zweiten Menge von Bildpunkten und der Ermittlung der Prüf-Geometrie geführt haben, wiederholt. Die Ausgabe der Abmessung kann dabei sowohl visuell als auch in Form der Ausgabe einer entsprechenden Datei realisiert sein.

Das voranstehend beschriebene Verfahren hat den Vorteil, dass im Idealfall die einfache Festlegung eines Startpunktes durch einen Nutzer, beispielsweise durch Auswählen eines Punktes in einer Darstellung des Objekts auf einem Anzeigemittel wie einem Computermonitor dazu führt, dass die Geometrie eines Teilbereichs bereits vollständig korrekt bestimmt wird.

Hierzu wird ausgehend von einem Startpunkt zunächst eine Menge von Bildpunkten ermittelt, welche die Geometrie des Teilbereichs in der direkten Umgebung des Startpunkts beschreibt. Die durch einen Nutzer ausgewählte Position in der Objektdarstellung, welche im Weiteren als Startpunkt verwendet wird, kann dabei identisch mit einem der Bildpunkte der Objektdarstellung sein. Es ist jedoch auch möglich, dass durch einen Nutzer eine Position zwischen den vorhandenen Bildpunkten ausgewählt wird. In diesem Fall kann zur Ermittlung der lokalen Parameter der Materialgrenzfläche des dargestellten Objekts eine Interpolation über die zu der ausgewählten Position benachbarten Bildpunkte erfolgen. Alternativ kann bei Auswahl einer Position, welche nicht mit einem vorhandenen Bildpunkt übereinstimmt, die Nutzereingabe so interpretiert werden, dass der zu der Position nächstliegende Bildpunkt als Startpunkt angenommen wird.

Ausgehend von der so erhaltenen Menge von Bildpunkten wird dann eine Prüf-Geometrie ermittelt, welche wahrscheinlich die Geometrie des Teilbereichs des Objekts, innerhalb dessen der Startpunkt liegt, korrekt beschreibt. Hierzu werden als Geometrieelemente vorzugsweise Regelgeometrien, wie Kreise, Linien, Ebenen, Kugeln, Tori, Zylinder, Konen, oder ähnliches so an die Bildpunkte der Zielmenge angepasst, dass eine möglichst gute Übereinstimmung der Geometrieelemente mit den Bildpunkten erreicht wird. Ferner kann auch vorgesehen sein, dass Freiformlinien und/oder Freiformflächen angepasst werden. Hierzu kann beispielsweise ein Fit-Verfahren verwendet werden, wie beispielsweise das Verfahren der kleinsten Quadrate nach Gauß, oder ein Fit nach Tschebyscheff. Bei der Anpassung eines Geometrieelements an die Bildpunkte der Zielmenge müssen dabei nicht zwingend alle Bildpunkte der Zielmenge berücksichtigt werden. Vielmehr kann zuvor aus der Zielmenge eine repräsentative Teilmenge von Bildpunkten ausgewählt werden, welche beispielsweise äquidistant zueinander angeordnet sind.

Die so ermittelte Prüf-Geometrie wird dann zur Bestimmung weiterer Bildpunkte verwendet, welche wahrscheinlich ebenfalls zu dem Teilbereich bzw. der Geometrie des Teilbereichs gehören, der durch die Nutzereingabe selektiert werden sollte.

Die so ermittelte Menge von Bildpunkten wird dann einem Nutzer über ein Anzeigemittel, wie beispielsweise einen Monitor, angezeigt. Beispielsweise kann dabei vorgesehen sein, dass die Bildpunkte, welche im Laufe des Verfahrens selektiert wurden, in der Objektdarstellung eingefärbt werden. Neben den ermittelten Bildpunkten kann dem Nutzer nach einer Ausführungsform ferner auch angezeigt werden, welches Geometrieelement an die Bildpunkte angepasst wurde. Ein Nutzer kann dann leicht erkennen, ob durch den Algorithmus die richtigen Bildpunkte ermittelt wurden, sodass die Geometrie wahrscheinlich richtig erkannt wurde. An dieser Stelle besteht für einen Nutzer entweder die Möglichkeit zu bestätigen, dass die Bildpunkte korrekt ermittelt wurden. In diesem Fall kann dann ein genauer Fit des Geometrieelements an die ermittelten Bildpunkte erfolgen und aus dem Ergebnis können Abmessungen der Geometrie ermittelt und ausgegeben werden.

Erkennt ein Nutzer hingegen, dass falsche, oder nicht alle relevanten Bildpunkte durch das Programm ermittelt wurden, kann der Nutzer dies dem Programm durch eine entsprechende Eingabe mitteilen, sodass der Algorithmus zur Ermittlung der Bildpunkte erneut durchlaufen wird.

Neben der Ausgabe der ermittelten Abmessungen und der weiteren während des Verfahrens ermittelten Größen, wie beispielsweise dem verwendeten Geometrieelement, dessen letztendlicher Position und Orientierung und den Werten und Toleranzintervallen der berücksichtigten Parameter, können diese Werte auch in einem entsprechenden Datenspeicher abgelegt werden. Die so ermittelten Werte können dann beispielsweise genutzt werden, um einen automatischen Prüfplan für weitere Messungen an Objekten desselben Typs bzw. derselben Nominalgeometrie zu erstellen. Hierzu können die ermittelten Informationen vorzugsweise auch aus der verwendeten Datenverarbeitungsanlage exportiert werden.

Das initiale Ermitteln der Objektdarstellung kann dabei sowohl durch eine Messung des Objekts erfolgen, als auch durch Auslesen eines Speichermediums, in dem die Objektdarstellung gespeichert ist. Bei der Messung handelt es sich um eine computertomographische Messung, eine optische Messung, beispielsweise mittels eines Laserscanners, eine Messung mittels Streifenprojektion oder eine taktile Messung. Generell ist jedes Messverfahren geeignet, welches Daten ausgibt, durch die Materialgrenzflächen und insbesondere Oberflächen eines untersuchten Objekts ermittelt werden können.

Dabei ist vorgesehen, dass das Ermitteln der ersten Menge von Bildpunkten das Ermitteln wenigstens eines ersten Parameters der Materialgrenzfläche am Ort des Startpunktes aufweist, wobei die jeweiligen ersten Parameter der Materialgrenzfläche an den Positionen der Bildpunkte der ersten Menge von Bildpunkten dem wenigstens einen ersten Parameter am Ort des ersten Bildpunktes entsprechen.

Bei dem ersten Parameter handelt es sich um einen Krümmungswert, der anzeigt, wie stark eine Materialgrenzfläche des dargestellten Objekts an der durch den Bildpunkt dargestellten Position gekrümmt ist. Neben einer Krümmung kann auch ein beliebiger anderer Parameter verwendet werden, der dazu geeignet ist, eine durch die Bildpunkte dargestellte Oberfläche zu charakterisieren. Werden in der direkten Umgebung dieses Startpunktes weitere Bildpunkte ermittelt, denen eine vergleichbare Krümmung zugeordnet ist, ist davon auszugehen, dass diese Bildpunkte zu derselben Geometrie gehören, zu denen auch der durch die Nutzereingabe ausgewählte Bildpunkt gehört. Die zuvor genannte "Entsprechung" von Parametern ist dabei gegeben, wenn die Parameter der weiteren aufgefundenen Bildpunkte innerhalb eines definierten Wertintervalls um den Parameter des Startpunktes liegen. Die Werte für den ersten Parameter und das entsprechende Werte- bzw. Toleranzintervall können dabei fortlaufend unter Berücksichtigung der bereits gefundenen Bildpunkte neu berechnet bzw. angepasst werden.

Ferner ist nach einer weiteren Ausführungsform vorgesehen, dass das Ermitteln der zweiten Menge von Bildpunkten das Ermitteln von Referenzwerten wenigstens eines zweiten Parameters für Bildpunkte in der Umgebung der Prüf-Geometrie aufweist, wobei die jeweiligen zweiten Parameter der Bildpunkte der zweiten Menge von Bildpunkten den ermittelten Referenzwerten entsprechen.

Hierzu wird ein weiterer Parameter gewählt und es werden Referenzwerte für weitere Bildpunkte ermittelt, welche zur Ermittlung der Prüf-Geometrie verwendet werden können. Bei solchen Referenzwerten kann es sich beispielsweise um die Position der Bildpunkte relativ zu der durch die Prüf-Geometrie vorgegebene Oberfläche oder die Abweichung der Richtung einer Normalen auf der Oberfläche der Prüf-Geometrie in Relation zu der Oberflächennormalen der Materialgrenzfläche des Objekts handeln. Unter Verwendung des weiteren zweiten Parameters können dann weitere Bildpunkte bestimmt und der Zielmenge zugeordnet werden, wenn diese den Referenzwerten unter Berücksichtigung einer Fehlertoleranz entsprechen. Bei der Ermittlung weiterer Punkte kann durchaus auch der zuvor zur Ermittlung der ersten Menge von Bildpunkten verwendete Parameter, wie beispielsweise eine Oberflächenkrümmung, erneut herangezogen werden. Beispielsweise kann bei der Ermittlung der zweiten Menge von Bildpunkten die Oberflächenkrümmung, die relative Richtungsabweichung einer Oberflächennormalen der Prüf-Geometrie von der Materialgrenzfläche und die Abweichung von Bildpunkten von der Prüf-Geometrie herangezogen werden.

Bei den zuvor beschriebenen Toleranzen bzw. Werteintervallen, welche bei der Ermittlung von Bildpunkten verwendet werden, kann es sich beispielsweise um statistische Maße handeln, welche aus den bisher ermittelten Bildpunkten abgeleitet werden. Beispielswese kann bei Verwendung der Oberflächenkrümmung als Parameter aus den Krümmungen der Materialgrenzfläche bei den bisher ermittelten Bildpunkten ein Mittelwert der Krümmungen, sowie die entsprechende Standardabweichung ermittelt werden. Die Standardabweichung, oder ein n-faches der Standardabweichung kann dann als Fehlertoleranz bei der Auswahl weiterer Bildpunkte verwendet werden. In ähnlicher Art und Weise kann für die relative Position eines Bildpunktes zu der Oberfläche der Prüf-Geometrie die mittlere quadratische Abweichung der Position von Bildpunkten von der Prüf-Geometrie für die Festlegung des Toleranzbereichs verwendet werden. Soll hingegen die Richtungsabweichung einer Oberflächennormalen der Prüf-Geometrie von der Oberflächennormalen der Materialgrenzfläche des Bauteils an der Position eines Bildpunktes als Parameter verwendet werden, kann als Toleranzbereich ein heuristischer Wert herangezogen werden, beispielsweise 20 Grad.

Wie zuvor bereits ausgeführt wurde, kann die zweite Nutzereingabe anzeigen, dass die in der Objektdarstellung angezeigten Bildpunkte der Zielmenge die Geometrie nicht korrekt wiedergegeben wird. Um dies anzuzeigen, ist nach einer Ausführungsform vorgesehen, dass die zweite Nutzereingabe wenigstens einen weiteren Bildpunkt als Startpunkt spezifiziert. In einer einfachen Implementierung könnte hierzu vorgesehen sein, dass die Auswahl eines weiteren Startpunktes durch den Benutzer automatisch dazu führt, dass die Ermittlung der Bildpunkte für die Zielmenge an Bildpunkten erneut gestartet wird. Dabei kann die initiale Ermittlung der ersten Menge von Bildpunkten ausgehend von allen Startpunkten erfolgen, welche zuvor durch einen Nutzer ausgewählt wurden. Auf diese Weise werden für die Durchführung des Algorithmus und die Bestimmung von Bildpunkten weitere Informationen bezüglich dem eigentlich zu ermittelnden Geometrieelement eingeführt, welche üblicherweise zu einem genaueren Ergebnis führen. Dabei kann ein Nutzer beliebig viele Startpunkte benennen, sofern er dies auf Grund der angezeigten ermittelten Bildpunkte der Zielmenge für notwendig erachtet. In dem Fall, dass durch die zweite Nutzereingabe eine weitere Position als Startpunkt definiert wird, kann in der weiteren Iteration des Verfahrens das Empfangen einer ersten Nutzereingabe, welche ebenfalls eine Position in der Objektdarstellung als Startpunkt definiert, entfallen.

Nach einer weiteren Ausführungsform kann die zweite Nutzereingabe ferner ein Geometrieelement festlegen, um anzuzeigen, dass die Geometrie nicht korrekt wiedergegeben wurde. In diesem Fall wird bei dem darauffolgenden Ermitteln der Prüf-Geometrie nur das durch die zweite Nutzereingabe festgelegte Geometrieelement berücksichtigt. Die Selektion eines Geometrieelements durch einen Nutzer kann beispielsweise dadurch implementiert sein, dass zusätzlich zu den ermittelten Bildpunkten der Zielmenge die für eine Einpassung in Frage kommenden Geometrieelemente beispielsweise in Form eines Pop-Up-Fenster angezeigt werden. Der Nutzer kann dann in Kenntnis der eigentlichen Geometrie des dargestellten Objekts ein entsprechendes Geometrieelement auswählen. Durch die Festlegung des Geometrieelements wird eine Fehlerquelle bei der weiteren Bestimmung von Bildpunkten der Zielmenge ausgeschlossen, sodass eine genauere Bestimmung der Geometrie und folglich auch der Abmessungen des Objekts möglich wird.

Um dem Nutzer bereits nach einem Durchlauf des Algorithmus ein möglichst exaktes Ergebnis präsentieren zu können, ist nach einer weiteren Ausführungsform vorgesehen, dass das Ermitteln der Prüf-Geometrie, das Ermitteln von Referenzwerten des zweiten Parameters, das ermitteln der zweiten Menge von Bildpunkten und das Einfügen der ermittelten Bildpunkte der zweiten Menge von Bildpunkten in die Zielmenge von Bildpunkten innerhalb eines Durchlaufs der Verfahrensschritte mehrfach iterativ durchgeführt wird. Das bedeutet, dass innerhalb eines einzelnen Durchlaufs des Verfahrens mehrfach Bildpunkte anhand einer eingepassten Geometrie ermittelt werden, bevor die Bildpunkte einem Benutzer angezeigt werden. Dabei werden die in einem vorherigen Iterationsschritt ermittelten Bildpunkte verwendet um eine neuerliche Einpassung des zuvor bestimmten Geometrieelements durchzuführen. Dabei wird eine nachfolgende Iteration vorzugsweise stets anhand des Geometrieelements durchgeführt, welches in einem vorangegangenen Iterationsschritt bereits ermittelt und zur Bestimmung der weiteren Bildpunkte verwendet wurde.

Anhand der so ermittelten Prüf-Geometrie werden dann erneut Bildpunkte ermittelt, welche wiederum in die Verfeinerung der Prüf-Geometrie einfließen können. Dabei können auch bei jeder Iteration ausgehend von den neu ermittelten Bildpunkten neue Sollwerte und Toleranzintervalle für die zu bestimmenden Parameter ermittelt werden. Diese Iteration kann beispielsweise so lange wiederholt werden, bis die Zielmenge von Bildpunkten konvergiert, also nur noch wenige weitere Bildpunkte ermittelt werden, welche der Zielmenge aufgrund der gegebenen Kriterien hinzugefügt werden können. Alternativ kann eine definierte Zahl von Iterationen fest vorgeschrieben werden, beispielsweise durch eine weitere Nutzereingabe. Die iterative Bestimmung von Bildpunkten und Prüf-Geometrien hat dabei den Vorteil, dass im Idealfall bereits nach einem einzelnen Durchlauf des Verfahrens bereits alle relevanten Bildpunkte erfasst wurden, sodass keine neuerliche Nutzereingabe notwendig ist. Auf diese Weise kann die Effizienz des beschriebenen Verfahrens verbessert werden.

Eine weitere Möglichkeit die Effizienz des Verfahrens zu steigern bzw. den benötigen Rechenaufwand zu reduzieren besteht nach einer Ausführungsform darin, dass das Ermitteln der ersten Menge von Bildpunkten abgebrochen wird, sobald die Anzahl von Bildpunkten in der ersten Menge von Bildpunkten eine vordefinierte Anzahl von Bildpunkten erreicht. Beispielsweise kann hierbei festgelegt werden, dass die Bestimmung der ersten Menge von Bildpunkten abgebrochen wird, sobald 300 Bildpunkte ermittelt wurden. Auf diese Weise kann die Verfahrensdauer und der Rechenaufwand reduziert werden. Die Wahl der Anzahl von Bildpunkten, ab der keine weiteren Bildpunkte mehr ermittelt werden, wird dabei vorzugsweise so getroffen, dass eine ausreichende Zahl von Messpunkten vorliegt, um eine ersten Prüf-Geometrie ermitteln zu können. Eine größere Zahl von Bildpunkten trägt an dieser Stelle noch nicht wesentlich zu der Genauigkeit der Ermittlung von Bildpunkten bei, da bei der Ermittlung der ersten Menge von Bildpunkten lediglich ein einziger Parameter geprüft wird, ohne Berücksichtigung einer möglichen Form eines Geometrieelements.

Dabei werden die bis zum Erreichen der zuvor beschriebenen Menge von Bildpunkten benötigten Bildpunkte vorzugsweise gleichmäßig auf die vorhandenen Startpunkte aufgeteilt. Beispielsweise kann hierbei festgelegt sein, dass im Zuge der Ermittlung der ersten Menge von Bildpunkten maximal 300 Bildpunkte ermittelt werden. Sind dabei zur Ermittlung der ersten Menge von Bildpunkten drei Startpunkte definiert worden, werden um jeden dieser Startpunkte jeweils genau 100 Bildpunkte ermittelt, bevor die Ermittlung der Bildpunkte abgebrochen wird. Entsprechend würden bei zwei Startpunkten auf jeden der Startpunkte genau 150 Bildpunkte entfallen. Diese Vorgehensweise hat den Vorteil, dass auch sehr kleine Geometrien, wie beispielsweise ein abgerundeter Übergang zwischen zwei Ebenen, welcher lokal als Zylinder betrachtet werden kann, durch die Auswahl mehrerer Startpunkte gut begrenzt werden können. Würden hierbei zu jedem Startpunkt jeweils eine große Zahl von Bildpunkten ermittelt, bestünde die Gefahr, dass irrtümlicherweise auch Bildpunkte der angrenzenden Ebenen berücksichtigt würden, die eigentlich nicht zu der zu untersuchenden Geometrie gehören. Dies würde das schlussendliche Messergebnis verfälschen und zu Fehlinterpretationen führen.

Nach einer weiteren Ausführungsform weist das Ermitteln der Prüf-Geometrie die nachfolgend beschriebenen Schritte auf:
Zunächst wird ein Geometrieelement ermittelt. Anschließend wir das ermittelte Geometrieelement durch Anwenden eines Fit-Verfahrens an die Bildpunkte der Zielmenge von Bildpunkten angepasst und wenigstens eine Abweichung des angepassten Geometrieelements von den Bildpunkten der Zielmenge von Bildpunkten ermittelt. Diese Abfolge von Schritten wird für wenigstens zwei Geometrieelemente wiederholt. Abschließend wird dann als Prüf-Geometrie das angepasste Geometrieelement mit der geringsten ermittelten Abweichung festgelegt. Auf diese Weise können automatisiert eine Vielzahl von Geometrieelementen gegen die ermittelten Bildpunkte geprüft werden, wobei durch das Verfahren automatisch jenes angepasste Geometrieelement ausgewählt wird, welches mit der höchsten Wahrscheinlichkeit zu den ermittelten Bildpunkten der Zielmenge von Bildpunkten passt. Dies hat den Effekt, dass der Automatisierungsgrad des Verfahrens und damit dessen Effizienz weiter verbessert ist, da im Idealfall keine weitere Nutzerinteraktion notwendig ist um eine Geometrie-Grundform auszuwählen.

Die Geometrieelemente können dabei beispielsweise aus einem Speichermedium des Computersystems, auf dem das erfindungsgemäße Verfahren implementiert ist, ausgelesen werden. Zur Anpassung der Geometrieelemente an die Bildpunkte der Zielmenge von Bildpunkten kann ein beliebiges Fit-Verfahren, wie beispielsweise das Verfahren der kleinsten Quadrate nach Gauß oder ein Fit nach Tschebyscheff verwendet werden. Bei der Anpassung der Geometrieelemente müssen dabei, wie zuvor bereits ausgeführt wurde, nicht zwingend alle Bildpunkte der Zielmenge verwendet werden.

Die bei der Ermittlung der Prüf-Geometrie berücksichtigten Geometrieelemente können dabei von der zuvor erfolgten Nutzereingabe insofern abhängen, dass beispielsweise nur dann zweidimensionale Geometrieelemente berücksichtigt werden, wenn alle durch eine Nutzereingabe vorgegebenen Startpunkte innerhalb einer gemeinsamen Ebene liegen. Ferner kann es nach einer Ausführungsform vorgesehen sein, dass im Zuge der ersten Nutzereingabe durch einen Nutzer zunächst eine Schnittebene der Objektdarstellung definiert wird und anschließend nur in dieser Schnittebene Startpunkte festgelegt werden. In diesem Fall können zunächst ausschließlich zweidimensionale Geometrieelemente in der Schnittebene geprüft werden. Werden anschließend durch den Nutzer weitere Startpunkte außerhalb der Schnittebene vorgegeben, wird die Ermittlung der Prüf-Geometrie auf dreidimensionale Geometrieelemente erweitert. Dabei können die zuvor ermittelten Bildpunkte weiterhin berücksichtigt werden. Durch eine solche Vorauswahl der Geometrieelemente kann der Rechenaufwand weiter reduziert werden, da die Zahl der möglichen Variablen reduziert ist. Ferner kann eine Uneindeutigkeit bezüglich der Frage, ob ein zweidimensionales oder ein dreidimensionales Geometrieelement anzupassen ist, vermieden werden. So kann es in manchen Fällen vorkommen, dass anhand der gewählten Startpunkte nicht unterschieden werden kann, ob lediglich ein Kreis als Geometrieelement angepasst werden soll, oder ein Zylinder. Durch die definierte Auswahl einer Schnittebene wird es erst möglich, gezielt in einer bestimmten, klar definierten Ebene des Objekts Messungen vorzunehmen.

Die zuvor beschriebene Prüfung unterschiedlicher Geometrieelemente ist selbstverständlich nicht notwendig und wird erfindungsgemäß auch nicht durchgeführt, wenn durch die zweite Nutzereingabe bereits ein Geometrieelement festgelegt wurde, wie es zuvor beschrieben worden ist.

Das zuvor beschriebene Ermitteln der Abweichung des angepassten Geometrieelements kann nach einer weiteren Ausführungsform wie nachfolgend beschrieben durchgeführt werden:
Zunächst wird das mittlere Abstandsquadrat des angepassten Geometrieelements von der Zielmenge von Bildpunkten als Positionsfehler ermittelt. Ferner wird der mittlere quadratische Sinus der Winkeldifferenz der jeweiligen Normalenvektoren der angepassten Soll-Geometrie und der Zielmenge von Bildpunkten als Richtungsfehler ermittelt. Aus dem zuvor ermittelten Positionsfehler und dem Richtungsfehler wird dann das entsprechende Produkt ermittelt, wobei das ermittelte Produkt anschließend mit einem definierten Gewichtungsfaktor gewichtet wird, der von dem jeweiligen Geometrieelement abhängt. Das so gewichtete Produkt wird dann als Abweichung des angepassten Geometrieelements definiert.

Bei den Gewichtungsfaktoren handelt es sich dabei vorzugsweise um einen heuristischen Faktor, welcher allgemein durch ein Geometrieelement bestimmt ist. So kann beispielsweise dem Geometrieelement "Kugel" ein anderer Gewichtungsfaktor zugeordnet sein, als dem Geometrieelement "Zylinder".

Die vorstehend beschriebene Bestimmung einer Abweichung eines angepassten Geometrieelements von den Bildpunkten einer Zielmenge von Bildpunkten ist besonders robust gegen ein in einer digitalen Darstellung eines Objekts üblicherweise vorhandenes Rauschen der Informationen der Bildpunkte.

Die Effizienz des erfindungsgemäßen Verfahrens kann nach einer weiteren Ausführungsform weiter gesteigert werden, indem nach dem Einfügen der Bildpunkte der zweiten Menge von Bildpunkten in die Zielmenge von Bildpunkten selektiv Bildpunkte aus der Zielmenge der Bildpunkte gelöscht werden, sodass die in der Zielmenge der Bildpunkte verbleibenden Bildpunkte gleichmäßig, insbesondere äquidistant in einem regelmäßigen Raster im Raum verteilt sind. Dabei kann auch vorgesehen sein, dass für die Bildpunkte der Zielmenge mit nunmehr verfeinerten Informationen im Zuge eines Resamplings erneut geprüft wird, ob die Parameter der Bildpunkte weiterhin den durch die entsprechenden Soll-Werte und Toleranzintervalle gegebenen Bedingungen entsprechen. Im Zuge des Resamplings können auch weitere, bisher nicht berücksichtigte Punkte in die Zielmenge aufgenommen werden, sofern diese den jeweiligen Anforderungen hinsichtlich ihrer Parameter entsprechen. Auf diese Weise kann der Rechenaufwand des Verfahrens aufgrund einer reduzierten Zahl von zu berücksichtigenden Datenpunkten reduziert werden, ohne einen wesentlichen Verlust an Informationen bzw. Genauigkeit des Verfahrens in Kauf nehmen zu müssen. So tragen die zusätzlichen Bildpunkte einer lokal verdichteten Verteilung der Bildpunkte nicht wesentlich zu der Genauigkeit der Einpassung des Geometrieelementes bei, erhöht jedoch unter Umständen den Rechenaufwand signifikant.

Das zuvor beschriebene Verfahren zur Bestimmung der Geometrie eines Teilbereichs eines Objekts kann nach einer weiteren Ausführungsform auch zur Bestimmung aller lokaler Geometrien eines Objekts verwendet werden. Hierzu kann beispielsweise die Oberfläche eines Objekts bzw. dessen Materialgrenzflächen mit einem gleichmäßigen Raster aus Startpunkten überzogen werden. Dabei ist das Raster in seiner Maschengröße vorzugsweise so angepasst, dass in jeder Teilgeometrie des Objekts wenigstens ein Bildpunkt als Startpunkt definiert wurde. Anschließend wird für alle so gefundenen Startpunkte die beschriebene Ermittlung der jeweiligen lokalen Teilgeometrien durchgeführt. Effektiv kann so in einem einzigen, vollständigen automatisierten Ablauf eine vollständige Vermessung eines Bauteils hinsichtlich aller vorliegenden Geometrien realisiert werden.

In einem weiteren Aspekt betrifft die Erfindung ein Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigt:

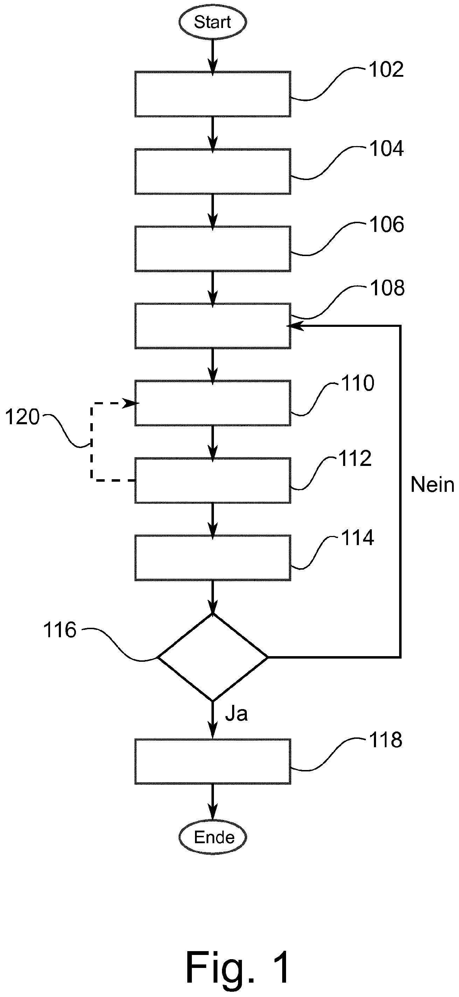

- Fig. 1: ein Flussdiagramm einer Ausführungsform des Verfahrens

Die Figur 1 zeigt ein Flussdiagramm einer Ausführungsform des erfindungsgemäßen Verfahrens zur Erkennung von Geometrien von Teilbereichen in Objektdarstellungen. Dabei wird in einem ersten Verfahrensschritt 102 zunächst die Objektdarstellung ermittelt. Unter einer Objektdarstellung ist dabei eine digitale Darstellung eines Objekts, wie beispielsweise eines Werkstücks zu verstehen. Dabei sind in der Objektdarstellung die Materialgrenzflächen des Objekts durch entsprechende Bildpunkte kodiert, die durch ihre relative Lage zueinander die Geometrie des Objekts nachbilden. Unter einer Materialgrenzfläche ist dabei generell jede Fläche eines Objekts zu verstehen, an deren Position ein Übergang eines ersten Materials des Objekts zu einem zweiten Material stattfindet. Beispielsweise kann eine solche Materialgrenzfläche die Oberfläche des Objekts beschreiben, da hier ein Übergang von dem eigentlichen Material des Objekts, beispielsweise Metall, zur Umgebungsluft stattfindet und folglich das Material des Objekts hier begrenzt ist.

Unter einer Materialgrenzfläche kann jedoch auch eine Fläche verstanden werden, bei der beispielsweise ein erstes Material eines Objekts, beispielsweise Aluminium, mit einem zweiten Material eines Objekts, beispielsweise einem Kunststoff in Kontakt steht. Eine solche Situation ist beispielsweise bei Objekten vorhanden, die aus mehreren Teilwerkstücken zusammengesetzt sind, die jeweils aus unterschiedlichen Materialien bestehen. Zur Ermittlung der Objektdarstellung kann beispielsweise eine Messung des Objekts durchgeführt werden, oder die Objektdarstellung wird aus einem Speichermedium ausgelesen. Zur Messung eines Objekts kann beispielsweise eine computertomographische Untersuchung des Objekts vorgesehen sein. Dabei können insbesondere auch innenliegende Geometrien des untersuchten Objekts ermittelt werden. Es ist jedoch durchaus auch möglich die Oberfläche eines Objekts beispielsweise mit einem Laserscanner, einer Vorrichtung zur Durchführung einer Streifenprojektion, oder einem taktilen Messgerät abzutasten, um so ein digitales Oberflächenmodell des untersuchten Objekts zu erhalten, welche ebenfalls eine Objektdarstellung im Sinne der vorliegenden Erfindung darstellt.

Nachdem die Objektdarstellung ermittelt wurde, wird sie einem Nutzer in Schritt 104 auf einem Anzeigemittel dargestellt. Bei einem Anzeigemittel kann es sich generell um jedes Mittel handeln, welches dazu geeignet ist, die Objektdarstellung so zu visualisieren, dass sie durch einen Nutzer visuell wahrgenommen werden kann. Beispielsweise kann es sich bei dem Anzeigemittel um einen Monitor handeln, der mit einem Computersystem verbunden ist, das zur Ausführung des Verfahrens programmiert wurde. Ferner kann es sich bei dem Anzeigemittel auch um eine VR-Brille oder ähnliches handeln.

In einer visualisierten Objektdarstellung sind üblicherweise eine Vielzahl von Geometrieelementen zu erkennen. Beispielsweise kann es sich bei dem Objekt um einen Motorblock handeln. In diesem Objekt existiert eine Vielzahl von Bohrungen, gekrümmten und graden Oberflächen, Extrusionen, Kanälen und ähnlichem. Jedes dieser Elemente kann zumindest abschnittsweise durch ein entsprechendes Geometrieelement beschrieben werden. Als Geometrieelemente werden dabei vorzugsweise Regelgeometrieelemente, wie Kreise, Linien, Ebenen, Kugeln, Tori, Zylinder, Konen, oder auch Freiformlinien oder Freiformflächen verwendet. Ein Nutzer kann dann anhand der visualisierten Objektdarstellung beispielsweise überprüfen, ob eine bestimmte Bohrung den bei der Herstellung vorgegeben Maßen entspricht.

Hierzu kann der Nutzer in der visualisierten Objektdarstellung wenigstens einen ersten Startpunkt auswählen, der auf der Oberfläche der zu untersuchenden Geometrie liegt, sodass in Schritt 106 eine entsprechende erste Nutzereingabe empfangen wird, die wenigstens einen Bildpunkt der Objektdarstellung als Startpunkt identifiziert. In einer einfachen Ausführungsform kann der Nutzer eine Stelle auf der Oberfläche des dargestellten Objekts beispielsweise mit einem Cursor auswählen. Das Verfahren beinhaltet dann die Ermittlung eines Bildpunktes, welcher der ausgewählten Stelle am nächsten ist und die Festlegung dieses Bildpunktes als Startpunkt.

Ausgehend von diesem Startpunkt wird anschließend in dem Verfahrensschritt 108 eine erste Menge von Bildpunkten in der unmittelbaren Umgebung des Startpunktes ermittelt, welche mit hoher Wahrscheinlichkeit zu derselben Geometrie gehört, wie der Startpunkt. Hierzu wird zunächst wenigstens ein erster Parameter der Materialgrenzfläche am Ort des Startpunktes ermittelt. Hierbei wird die lokale Krümmung der Materialgrenzfläche am Ort des Startpunktes herangezogen. Diese kann bereits in der digitalen Objektdarstellung hinterlegt sein, oder sie wird an dieser Stelle durch im Stand der Technik bekannte Verfahren berechnet. Diese lokale Krümmung dient dann als Ausgangspunkt für die Suche nach weiteren Bildpunkten in der unmittelbaren Umgebung.

Ferner wird zu dem Krümmungswert ein Toleranzintervall definiert, welches angibt, in welchem Bereich um den ermittelten Krümmungswert weitere Krümmungswerte noch als "ausreichend nahe bei dem Krümmungswert" interpretiert werden sollen. Zur Bestimmung des Toleranzintervalls für die Krümmung können beispielsweise Bildpunkte, welche sich in der direkten Umgebung um den Startpunkt befinden, ermittelt werden. Aus der so ermittelten Menge von Bildpunkten kann dann ein Toleranzintervall beispielsweise als n-faches der Standardabweichung der Krümmungen der so ermittelten Bildpunkte ermittelt werden. Wird dann in der Umgebung des Startpunktes ein weiterer Bildpunkt ermittelt, dem ein Krümmungswert zugeordnet ist, der ausreichend nahe bei dem Krümmungswert des Startpunktes liegt, wird dieser Bildpunkt in die erste Menge von Bildpunkten aufgenommen. Alle Bildpunkte, welche außerhalb der vorgegebenen Toleranz liegen, werden dabei ignoriert. Die jeweiligen Werte für den Soll-Krümmungswert und das entsprechende Toleranzintervall können dabei während der Suche nach weiteren Bildpunkten iterativ auf Grundlage der bereits ermittelten Bildpunkte neu berechnet bzw. weiter angepasst werden.

Durch die Wahl des Toleranzintervalls als n-faches der Standardabweichung kann eine Ermittlung weiterer Punkte für die erste Menge von Bildpunkten an eine Reihe von Randbedingungen angepasst werden. Würde beispielsweise eine einfache Standardabweichung als Toleranzintervall gewählt, würde die Suche nach weiteren Punkte vergleichsweise schnell abbrechen, da mit der Hinzunahme weiterer Bildpunkte, welche ohnehin innerhalb der bisher ermittelten Standardabweichung liegen, die im weiteren ermittelte Standardabweichung stetig kleiner würde. Folglich würden immer weniger Bildpunkte den Suchkriterien entsprechen. Dem kann jedoch entgegengewirkt werden, indem beispielsweise ein Vielfaches der Standardabweichung, beispielsweise ein zwanzigfaches der Standardabweichung als Toleranzintervall gewählt wird. Die Wahl des Faktors n zur Bestimmung des Toleranzintervalls kann dabei je nach Anwendungsfall unterschiedlich ausfallen.

Die Suche nach weiteren Bildpunkten für die erste Menge von Bildpunkten kann beispielsweise dahingehend begrenzt werden, dass die Suche abgebrochen wird, sobald die Anzahl der Bildpunkte in der ersten Menge von Bildpunkte einen gewissen Grenzwert erreicht. Beispielsweise kann die Suche nach Bildpunkten in Schritt 108 abgebrochen werden, sobald 200 oder 300 entsprechende Bildpunkte ermittelt werden konnten.

Diesem Verfahrensschritt liegt die Überlegung zugrunde, dass Bildpunkten, welche eine gemeinsame Geometrie beschreiben, stets ein gleicher oder zumindest sehr ähnlicher Krümmungswert zugeordnet sein wird. Beispielsweise werden alle Bildpunkte auf der Oberfläche einer Bohrung einen mehr oder weniger gleichen lokalen Krümmungsradius aufweisen, da der Krümmungsradius durch den Innenradius der Bohrung vorgegeben ist. Analoge Überlegungen gelten für die übrigen möglichen Geometrieelemente.

Die Bildpunkte der ersten Menge von Bildpunkten werden anschließend in Schritt 110 dazu verwendet, eine erste Prüf-Geometrie zu ermitteln. Eine "Prüf-Geometrie" ist dabei ein an die Bildpunkte der Zielmenge angepasstes Geometrieelement, also eine Geometrie-Grundform, deren Parameter so angepasst wurden, dass sie eine möglichst große Übereinstimmung mit den Bildpunkten der Zielmenge aufweist. Zur Bestimmung einer solchen Prüf-Geometrie wird dabei gemäß einer bevorzugten Ausführungsform wie folgt vorgegangen.

Zunächst wird aus einer Vielzahl von Geometrieelementen bestimmtes Geometrieelement, beispielsweise ein Zylinder ausgesucht, dessen Parameter, also in diesem Fall dessen Radius und die Position und Orientierung der Mittelachse zunächst noch unbestimmt sind. Durch Anwendung eines Fit-Verfahrens, wie beispielsweise des Verfahrens der kleinsten Quadrate nach Gauß oder eines Fits nach Tschebyscheff wird dieses Geometrieelement dann an die Bildpunkte der Zielmenge angepasst. Das Ergebnis ist ein Zylinder mit definiertem Radius und einer definierten Position und Orientierung der Mittelachse.

Für das angepasste Geometrieelement wird dann die Abweichung des angepassten Geometrieelements von den Bildpunkten der Zielmenge ermittelt. In die Bestimmung der Zielmenge können eine Vielzahl von Parametern einfließen. Gemäß einer bevorzugten Ausführungsform werden zum einen ein Positionsfehler und zum anderen ein Richtungsfehler zur Bestimmung der Abweichung herangezogen.

Zur Bestimmung des Positionsfehlers wird das mittlere Abstandsquadrat des angepassten Geometrieelements von den Bildpunkten der Zielmenge bestimmt. Der Richtungsfehler berücksichtigt ferner den Unterschied einer Oberflächennormale des angepassten Geometrieelements zu einer entsprechenden Oberflächennormale der Materialgrenzfläche des Objekts gemäß dessen digitaler Darstellung an einem entsprechenden Bildpunkt. Der Unterschied zwischen den entsprechenden Oberflächennormalen kann beispielsweise durch den Winkel zwischen den Normalenrichtungen gegeben sein. Der Richtungsfehler der gesamten angepassten Geometrie ergibt sich dann aus dem mittleren quadratischen Sinus dieser lokalen Unterschiede in den Normalenrichtungen.

Die gesamte Abweichung der angepassten Geometrie von den Bildpunkten kann dann durch das Produkt aus Positionsfehler und Richtungsfehler multipliziert mit einem heuristischen Gewichtungsfaktor ermittelt werden, wobei der Gewichtungsfaktor wiederum von dem ursprünglichen Geometrieelement abhängt. Beispielsweise kann der Gewichtungsfaktor für eine Ebene 0,8 betragen, während der Gewichtungsfaktor für einen Torus 1,2 und für einen Zylinder 1,0 beträgt.

Die zuvor beschriebenen Schritte der Ermittlung eines Geometrieelements, Anpassen des Geometrieelements und Bestimmen der Abweichung des Geometrieelements von den Bildpunkten der Zielmenge können für mehrere Geometrieelemente wiederholt werden, sodass am Ende jeweilige Sätze von Parametern und Abweichungen für Zylinder, Torus, Kugel etc. vorliegen. Als Prüf-Geometrie wird dann genau das angepasste Geometrieelement angenommen, dessen Abweichung von den Bildpunkten der Zielmenge am geringsten ist.

Ausgehend von der so ermittelten Prüf-Geometrie werden anschließend in Schritt 112 weitere Bildpunkte ermittelt, welche unter Berücksichtigung der ermittelten Prüf-Geometrie mit großer Wahrscheinlichkeit ebenfalls zu der Menge von Punkten gehören, welche in der Objektdarstellung den relevanten Bereich der Geometrie darstellen. Wie die zuvor beschriebene Ermittlung der ersten Menge von Bildpunkten wird als Ausgangspunkt für die Ermittlung der zweiten Menge von Bildpunkten erneut der wenigstens eine Startpunkt herangezogen, welcher zuvor definiert wurde.

Zur Ermittlung der Bildpunkte der zweiten Menge von Bildpunkten wird ein zweiter Satz von Prüfparametern herangezogen. Beispielsweise kann erneut die lokale Krümmung der Oberfläche des dargestellten Objekts zur Bestimmung von weiteren Bildpunkten verwendet werden. Zusätzlich können aufgrund der Kenntnis der vorläufigen Prüf-Geometrie ferner eine Richtungsabweichung der Oberflächennormalen, sowie relative Positionsabweichungen zur Bestimmung weiterer Bildpunkte verwendet werden. Für die entsprechenden Prüfparameter werden daher ausgehend von den bisher bekannten Bildpunkten der Zielmenge von Bildpunkten wiederum Toleranzwerte ermittelt. Für die Krümmung kann beispielsweise die Standardabweichung der Krümmungen für die bisher ermittelten Bildpunkte zur Bestimmung des Toleranzbereichs herangezogen werden. Für die Richtungsabweichung der Flächennormalen kann ein heuristischer Wert, beispielsweise 20 Grad verwendet werden, während für die Toleranz für die Positionsabweichung aus der mittleren Positionsabweichung der bisher ermittelten Punkte von der Prüf-Geometrie oder ein Vielfaches dieses Wertes verwendet werden können.

Die Verwendung der zuvor benannten statistischen Maße hat dabei den Vorteil, dass die Breite der entsprechend ermittelten Toleranzbereiche hauptsächlich durch das Rauschen der Bildpunkte definiert ist. Ist eine Objektdarstellung nur schwach verrauscht, werden nur enge Toleranzgrenzen für die Auswahl von Bildpunkten angelegt. Würden diese Toleranzgrenzen auch für stark verrauschte Bereiche der Objektdarstellung verwendet werden, würden zu wenige Bildpunkte zugelassen werden, um ein verlässliches Ergebnis bei der Bestimmung der Geometrie zu erhalten. Da jedoch die Toleranzbereiche mit der Stärke des Rauschens skalieren, ist der beschriebene Weg zur Ermittlung weiterer Bildpunkte sehr robust gegen Rauschen der Objektdarstellung.

Es wird an dieser Stelle jedoch angemerkt, dass die zuvor beschriebenen Möglichkeiten zur Bestimmung von Toleranzintervallen zur Ermittlung von Bildpunkten nur Beispiele darstellen und keinesfalls als beschränkend verstanden werden dürfen. Vielmehr gibt es durchaus eine Vielzahl von Möglichkeiten, Toleranzintervalle für die bei der Ermittlung von Bildpunkten berücksichtigten Parameter zu definieren. In einem sehr einfachen Fall können solche Toleranzintervalle auch frei festgelegt werden. Ferner ist auch eine Ermittlung der Toleranzintervalle aus anderen geeigneten Parametern einer Objektabbildung denkbar.

In der Umgebung der Objektdarstellung werden dann sukzessive alle weiteren Bildpunkte ermittelt, welche unter Berücksichtigung der ermittelten Referenzwerte für Krümmung, Positionsabweichung und Richtung der Oberflächennormale für die Darstellung der ausgewählten Geometrie in Frage kommen. Dabei ist nach einer Ausführungsform vorgesehen, dass während der Ermittlung weiterer Bildpunkte die Referenzwerte für die Suchparameter iterativ an die bislang gefundene Menge von Bildpunkten angepasst wird, sodass die Suche nach und nach verfeinert wird. Dies führt dazu, dass nach und nach immer weniger Bildpunkte gefunden werden, welche den angelegten Suchkriterien entsprechen, sodass die Suche nach weiteren Bildpunkten ab einem bestimmten Punkt abbricht, da keine weiteren Bildpunkte mehr ermittelt werden können. Die ermittelten Bildpunkte werden dann in der Zielmenge von Bildpunkten gespeichert.

Wie durch den Pfeil 120 angedeutet ist, kann nach einer weiteren Ausführungsform hierbei auch vorgesehen sein, dass nach Ermittlung einer bestimmten Zahl von Bildpunkten anhand der Suchparameter erneut die Prüf-Geometrie ermittelt wird, indem nochmals das Geometrieelement an die nun ermittelten Bildpunkte angepasst wird. Auf diese Weise konvergiert die Suche nach weiteren Bildpunkten immer mehr. Vorzugsweise wird dabei dasselbe Geometrieelement verwendet, welches auch zuvor bereits an die ermittelten Bildpunkte angepasst wurde. Einzig die das Geometrieelement beschreibenden geometrischen Eigenschaften werden an die weiteren ermittelten Bildpunkte angepasst.

Sobald die Suche nach weiteren Bildpunkten in Schritt 112 beendet wurde, wird dem Nutzer in Schritt 114 das ermittelte Ergebnis angezeigt. Dabei kann beispielsweise vorgesehen sein, dass die ermittelten Bildpunkte der Zielmenge von Bildpunkten in der visualisierten Objektdarstellung eingefärbt werden, sodass ein Nutzer sie erkennen kann. Beispielsweise können die entsprechenden Bildpunkte grün eingefärbt werden. Ferner kann vorgesehen sein, dass Bildpunkte, anhand einer entsprechenden Farbcodierung dahingehend klassifiziert werden, wie gut sie zu den Suchkriterien gepasst haben. Beispielsweise können Bildpunkte deren Parameter nur geringfügig von den entsprechenden Soll-Werten abweichen, grün dargestellt werden. Je weiter die Parameter eines Bildpunkts von den eigentlichen Soll-Parametern entfernt sind, kann eine entsprechende Farbcodierung beispielsweise über die Farbe Gelb zur Farbe Rot im Sinne einer "Zustandsampel" vorgesehen sein. Ferner kann vorgesehen sein, dass dem Nutzer auch eine Information bezüglich des angepassten Geometrieelements angezeigt wird, sodass der Nutzer beispielsweise darüber informiert wird, dass der Algorithmus die ausgewählte Geometrie als Zylinder oder Torus erkannt hat.

Der Nutzer kann dann aus seiner Kenntnis des Objekts heraus überprüfen, ob die richtigen und vollständigen Bildpunkte des entsprechenden Bereichs der Objektdarstellung ermittelt wurden, und ob das richtige Geometrieelement zugrunde gelegt wurde. Ist dies der Fall kann der Nutzer in Schritt 116 durch eine entsprechende zweite Nutzereingabe beispielsweise einen endgültigen Fit der Prüf-Geometrie an die Bildpunkte beauftragen, sodass ihm letzten Endes nach einer entsprechenden Auswertung in Schritt 118 anhand entsprechender Fit-Parameter die Dimensionen des untersuchten Bereichs des dargestellten Objekts ausgegeben werden. Ferner können die ermittelten Fit-Parameter, wie auch die weiteren geometrischen Eigenschaften der eingepassten Prüf-Geometrie gespeichert und/oder exportiert werden. Beispielsweise können diese Informationen genutzt werden, um einen Prüfplan für nachfolgende Objekte gleicher Nominalgeometrie zu erstellen.

Erkennt der Nutzer hingegen, dass die Geometrie nicht korrekt erkannt wurde, oder dass Bildpunkte eingeflossen sind, die nicht zu dem entsprechenden Bereich der Objektdarstellung gehören, kann er dies durch eine entsprechende zweite Nutzereingabe mitteilen. Die zweite Nutzereingabe kann dabei beispielsweise einen weiteren Startpunkt auf der gewünschten Oberfläche definieren, woraufhin das Verfahren zurück zu Schritt 108 springt und die Schritte 108, 110, 112 und 114 erneut durchführt.

Ferner kann dem Nutzer bei der Anzeige der Ergebnisse der vorherigen Analyse in Schritt 114 auch eine Auswahl in Frage kommender Geometrieelemente angezeigt werden. In diesem Fall kann die zweite Nutzereingabe ferner eine Auswahl des Geometrieelements beinhalten, sodass für das weitere Verfahren das zu verwendende Geometrieelement festgelegt ist. In diesem Fall findet in Schritt 110 die Anpassung des Geometrieelements ausschließlich für das festgelegte Geometrieelement statt. Die übrigen Geometrieelemente werden dann nicht mehr überprüft, sodass auch die Bestimmung einer Abweichung der angepassten Geometrieelemente und deren Vergleich entfallen kann.

Die Schritte 108 bis 114 werden dabei so oft durchlaufen, bis der Nutzer in Schritt 116 anzeigt, dass das Ergebnis der Analyse korrekt ist.

Die Erfindung ist nicht auf eine der vorbeschriebenen Ausführungsformen beschränkt, sondern in vielfältiger Weise abwandelbar.

So kann beispielsweise im Zuge der ersten Nutzereingabe in Schritt 106 durch den Nutzer zunächst eine Schnittebene des dargestellten Objekts definiert werden, in der nach bestimmten Geometrien gesucht werden soll. Der Nutzer kann dann entsprechende Startpunkte in der gewählten Schnittebene vorgeben. Solange der Nutzer ausschließlich in der gewählten, zweidimensionalen Schnittebene Startpunkte vorgibt, werden bei der Bestimmung der Prüf-Geometrie ausschließlich zweidimensionale Geometrieelemente, also Linien, Kurven und Kreise berücksichtigt. Wird durch Nutzer jedoch im weiteren Verfahrensablauf wenigstens ein Startpunkt außerhalb der gewählten Schnittebene definiert, werden im weiteren Verfahrensablauf nur noch dreidimensionale Geometrieelemente, also Kugel, Zylinder, Torus, etc. berücksichtigt. Die Ergebnisse aus vorangegangenen Iterationen bei der Bestimmung von Geometrien in der Schnittebene können dabei in die nachfolgende Bestimmung von dreidimensionalen Prüf-Geometrien einfließen.

Alternativ oder zusätzlich kann vorgesehen sein, dass das zu untersuchende Objekt einem Nutzer in mehreren Fenstern in unterschiedlichen Ansichten präsentiert wird. Beispielsweise kann in einem ersten Fenster eine isometrische oder frei drehbare dreidimensionale Ansicht des Objekts präsentiert werden, während in einem anderen Fenster lediglich eine zweidimensionale Ansicht entlang einer definierten Schnittebene präsentiert wird. Solange der Nutzer dabei ausschließlich in der zweidimensionalen Darstellung Startpunkte definiert, ist die Suche nach entsprechenden Prüf-Geometrien auf zweidimensionale Geometrieelemente beschränkt. Wählt der Nutzer hingegen Startpunkte in der dreidimensionalen Ansicht aus, werden automatisch ausschließlich dreidimensionale Prüf-Geometrien ermittelt.

## Patentansprüche

1. Computer-implementiertes Verfahren zur Erkennung einer Geometrie eines Teilbereichs eines Objekts in einer dreidimensionalen digitalen Darstellung des Objekts basierend auf dem Auslesen eines Speichermediums, basierend auf einer computertomographischen Messung, einer optischen Messung oder einer Messung mittels Streifenprojektion oder basierend auf einem Messverfahren, welches Daten ausgibt, durch die Materialgrenzflächen des untersuchten Objekts ermittelt werden können, wobei die digitale Darstellung eine Vielzahl von Bildpunkten aufweist, wobei die Bildpunkte der digitalen Darstellung wenigstens eine Materialgrenzfläche des Objekts darstellen, wobei das Verfahren die nachfolgenden Schritte aufweist:
a) Ermitteln (102) der Objektdarstellung,
b) Darstellen (104) der Objektdarstellung auf wenigstens einem Anzeigemittel,
c) Empfangen (106) wenigstens einer ersten Nutzereingabe, wobei die Nutzereingabe wenigstens eine erste Position in der Objektdarstellung als Startpunkt spezifiziert,
d) Ermitteln (108) einer ersten Menge von Bildpunkten in der Umgebung des Startpunktes, wobei die erste Menge von Bildpunkten die Geometrie des Teilbereichs im Bereich des Startpunkts abbildet, wobei das Ermitteln der ersten Menge von Bildpunkten das Ermitteln wenigstens eines ersten Parameters der Materialgrenzfläche des Objekts am Ort des Startpunktes aufweist, wobei die jeweiligen ersten Parameter der Materialgrenzfläche an den Positionen der Bildpunkte der ersten Menge von Bildpunkten dem wenigstens einen ersten Parameter am Ort des ersten Bildpunktes entsprechen, wobei die genannte Entsprechung von Parametern dabei gegeben ist, wenn die Parameter der weiteren aufgefundenen Bildpunkte innerhalb eines definierten Wertintervalls um den Parameter des Startpunktes liegen, wobei der wenigstens eine erste Parameter ein Krümmungswert ist, der anzeigt, wie stark eine Materialgrenzfläche des dargestellten Objekts an der durch den Bildpunkt dargestellten Position gekrümmt ist,
e) Ermitteln (110) einer Prüf-Geometrie anhand der ersten Menge von Bildpunkten durch Anpassen wenigstens eines Geometrieelements an die Bildpunkte der ersten Menge von Bildpunkten,
f) Ermitteln (112) einer zweiten Menge von Bildpunkten in der Umgebung des Startpunkts, wobei die zweite Menge von Bildpunkten die Geometrie des Teilbereichs im Bereich der Prüf-Geometrie abbildet,
g) Einfügen der zweiten Menge von Bildpunkten in wenigstens eine Zielmenge von Bildpunkten,
h) Anzeigen (114) der Bildpunkte der Zielmenge von Bildpunkten in der Objektdarstellung auf dem wenigstens einen Anzeigemittel,
i) Empfangen (116) wenigstens einer zweiten Nutzereingabe nach dem Anzeigen (114) der Bildpunkte der Zielmenge von Bildpunkten in der Objektdarstellung auf dem wenigstens einen Anzeigemittel, wobei die zweite Nutzereingabe anzeigt, ob die angezeigten Bildpunkte die Geometrie des Teilbereichs des Objekts korrekt wiedergeben,
j) Wenn die zweite Nutzereingabe anzeigt, dass die Geometrie korrekt wiedergegeben ist, Bestimmen (118) wenigstens einer Abmessung der Geometrie und Ausgeben der Abmessung,
k) Wenn die zweite Nutzereingabe anzeigt, dass die Geometrie nicht korrekt wiedergegeben ist, wiederholen der Schritte c) bis i).

2. Verfahren nach Anspruch 1, **dadurch gekennzeichnet, dass** das Ermitteln der zweiten Menge von Bildpunkten das Ermitteln von Referenzwerten wenigstens eines zweiten Parameters für Bildpunkte in der Umgebung der Prüf-Geometrie aufweist, wobei die jeweiligen zweiten Parameter der Bildpunkte der zweiten Menge von Bildpunkten den ermittelten Referenzwerten entsprechen.

3. Verfahren nach einem der vorherigen Ansprüche, **dadurch gekennzeichnet, dass** die zweite Nutzereingabe, um anzuzeigen, dass die Geometrie nicht korrekt wiedergegeben ist, wenigstens eine weitere Position der Objektdarstellung als Startpunkt spezifiziert.

4. Verfahren nach einem der vorherigen Ansprüche, **dadurch gekennzeichnet, dass** die zweite Nutzereingabe, um anzuzeigen, dass die Geometrie nicht korrekt wiedergegeben ist, das Geometrieelement festlegt, sodass bei dem Ermitteln der Prüf-Geometrie nur das durch die zweite Nutzereingabe festgelegte Geometrieelement berücksichtigt wird.

5. Verfahren nach einem der vorherigen Ansprüche, **dadurch gekennzeichnet, dass** innerhalb einer Durchlaufs der Schritte c) bis i) die Abfolge der Schritte e), f) und g) wenigstens zweifach durchlaufen wird.

6. Verfahren nach einem der vorherigen Ansprüche, **dadurch gekennzeichnet, dass** das Ermitteln der ersten Menge von Bildpunkten abgebrochen wird, sobald eine Anzahl an Bildpunkten in der ersten Menge von Bildpunkten eine vordefinierte Anzahl von Bildpunkten erreicht.

7. Verfahren nach einem der vorherigen Ansprüche, **dadurch gekennzeichnet, dass** das Ermitteln der Prüf-Geometrie die nachfolgenden Schritte aufweist:
p) Ermitteln eines Geometrieelements,
q) Anpassen des Geometrieelements an die Bildpunkte der Zielmenge von Bildpunkten durch Anwenden eines Fit-Verfahrens,
r) Ermitteln wenigstens einer Abweichung des angepassten Geometrieelements von den Bildpunkten der Zielmenge von Bildpunkten,
wobei die Abfolge der Schritte p) bis r) für wenigstens zwei Geometrieelemente wiederholt wird,
wobei als Prüf-Geometrie das angepasste Geometrieelement mit der geringsten ermittelten Abweichung festgelegt wird.

8. Verfahren nach Anspruch 7, **dadurch gekennzeichnet, dass** das Ermitteln der Abweichung des angepassten Geometrieelements die nachfolgenden Schritte aufweist:
u) Ermitteln eines mittleren Abstandsquadrats des angepassten Geometrieelements von der Zielmenge von Bildpunkten als Positionsfehler,
v) Ermitteln eines desmittleren quadratischen Sinus einer Richtungsdifferenz zwischen einer Normalen der angepassten Soll-Geometrie und der Zielmenge von Bildpunkten als Richtungsfehler,
w) Ermitteln eines Produkts aus Positionsfehler und Richtungsfehler,
x) Gewichten des Produkts mit einem definierten Gewichtungsfaktor, wobei der Gewichtungsfaktor von dem Geometrieelement abhängt,
y) Definieren des gewichteten Produkts als Abweichung des angepassten Geometrieelements.

9. Verfahren nach einem der vorherigen Ansprüche, **dadurch gekennzeichnet, dass** nach Durchführung des Schrittes g) selektiv Bildpunkte aus der Zielmenge der Bildpunkte gelöscht werden, sodass die in der Zielmenge der Bildpunkte verbleibenden Bildpunkte gleichmäßig im Raum verteilt sind.

10. Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

## Claims

1. Computer-implemented method for identifying a geometry of a portion of an object in a three-dimensional digital representation of the object on the basis of reading a storage medium, on the basis of a computer tomography measurement, an optical measurement or a measurement by means of fringe projection or on the basis of a measurement method which outputs data that can be used to ascertain material interfaces of the examined object, the digital representation having a multiplicity of pixels, the pixels of the digital representation representing at least one material interface of the object, the method including the following steps:
a) ascertaining (102) the object representation,
b) presenting (104) the object representation on at least one display means,
c) receiving (106) at least one first user input, the user input specifying at least one first position in the object representation as a starting point,
d) ascertaining (108) a first set of pixels in the surroundings of the starting point, the first set of pixels representing the geometry of the portion in the region of the starting point, wherein the ascertainment of the first set of pixels includes the ascertainment of at least one first parameter of the material interface of the object at the location of the starting point, the respective first parameters of the material interface at the positions of the pixels of the first set of pixels corresponding to the at least one first parameter at the location of the first pixel, wherein mentioned correspondence of parameters is given when the parameters of the further pixels found are within a defined value interval around the parameter of the starting point, wherein the at least one first parameter is a curvature value that indicates how strongly a material interface of the presented object is curved at the position represented by the pixel,
e) ascertaining (110) a test geometry on the basis of the first set of pixels by fitting at least one geometric element to the pixels of the first set of pixels,
f) ascertaining (112) a second set of pixels in the surroundings of the starting point, the second set of pixels representing the geometry of the portion in the region of the test geometry,
g) inserting the second set of pixels into at least one target set of pixels,
h) displaying (114) the pixels of the target set of pixels in the object representation on the at least one display means,
i) receiving (116) at least one second user input after displaying (114) the pixels of the target set of pixels in the object representation on the at least one display means, the second user input indicating whether the displayed pixels correctly reproduce the geometry of the portion of the object,
j) should the second user input indicate that the geometry is correctly reproduced, determining (118) at least one dimension of the geometry and outputting the dimension,
k) should the second user input indicate that the geometry is not reproduced correctly, repeating steps c) to i).

2. Method according to Claim 1, **characterized in that** the ascertainment of the second set of pixels includes the ascertainment of reference values of at least one second parameter for pixels in the surroundings of the test geometry, the respective second parameters of the pixels of the second set of pixels corresponding to the ascertained reference values.

3. Method according to any of the preceding claims, **characterized in that** the second user input for indicating that the geometry has not been reproduced correctly specifies at least one further position of the object representation as a starting point.

4. Method according to any of the preceding claims, **characterized in that** the second user input for indicating that the geometry has not been reproduced correctly sets the geometric element such that only the geometric element set by the second user input is taken into account when ascertaining the test geometry.

5. Method according to any of the preceding claims, **characterized in that** the sequence of steps e), f) and g) is run through at least twice within one iteration of steps c) to i).

6. Method according to any of the preceding claims, **characterized in that** the ascertainment of the first set of pixels is terminated as soon as the number of pixels in the first set of pixels reaches a predefined number of pixels.

7. Method according to any of the preceding claims, **characterized in that** the ascertainment of the test geometry includes the following steps:
p) ascertaining a geometric element,
q) fitting the geometric element to the pixels of the target set of pixels by applying a fit method,
r) ascertaining at least one deviation of the fitted geometric element from the pixels of the target set of pixels,
wherein the sequence of steps p) to r) is repeated for at least two geometric elements,
wherein the fitted geometric element with the smallest ascertained deviation is set as the test geometry.

8. Method according to Claim 7, **characterized in that** the ascertainment of the deviation of the fitted geometric element includes the following steps:
u) ascertaining a mean square distance of the fitted geometric element from the target set of pixels as position error,
v) ascertaining a mean square sine of a difference in direction between a normal of the fitted intended geometry and the target set of pixels as directional error,
w) ascertaining a product of position error and directional error,
x) weighting the product with a defined weighting factor, the weighting factor depending on the geometric element,
y) defining the weighted product as the deviation of the fitted geometric element.

9. Method according to any of the preceding claims, **characterized in that** pixels from the target set of pixels are selectively deleted after step g) has been carried out such that the pixels remaining in the target set of the pixels are distributed uniformly in space.

10. Computer program product comprising instructions able to be executed on a computer, which instructions, when executed on a computer, prompt the computer to carry out the method according to any of the preceding claims.

## Revendications

1. Procédé mis en œuvre par ordinateur pour détecter une géométrie d'une zone partielle d'un objet dans une représentation numérique tridimensionnelle de l'objet, sur la base de la lecture d'un support de stockage, sur la base d'une mesure de tomographie par ordinateur, d'une mesure optique ou d'une mesure au moyen d'une projection de frange ou sur la base d'un procédé de mesure qui sort des données qui permettent de déterminer des surfaces limites de matière de l'objet examiné, dans lequel la représentation numérique présente une pluralité de pixels, dans lequel les pixels de la représentation numérique représentent au moins une surface limite de matière de l'objet, le procédé présentant les étapes suivantes consistant à :
a) déterminer (102) la représentation d'objet,
b) représenter (104) la représentation d'objet sur au moins un moyen d'affichage,
c) recevoir (106) au moins une première entrée utilisateur, l'entrée utilisateur spécifiant au moins une première position dans la représentation d'objet comme point de départ,
d) déterminer (108) une première quantité de pixels autour du point de départ, la première quantité de pixels reproduisant la géométrie de la zone partielle au niveau du point de départ, dans lequel la détermination de la première quantité de pixels présente la détermination d'au moins un premier paramètre de la surface limite de matière de l'objet à l'endroit du point de départ, dans lequel les premiers paramètres respectifs de la surface limite de matière aux positions des pixels de la première quantité de pixels correspondent audit au moins un premier paramètre à l'endroit du premier pixel, dans lequel ladite correspondance de paramètres est donnée si les paramètres des autres pixels retrouvés se trouvent dans un intervalle de valeurs défini autour du paramètre du point de départ, dans lequel ledit au moins un premier paramètre est une valeur de courbure qui indique à quel point une surface limite de matière de l'objet représenté est courbée dans la position représentée par le pixel,
e) déterminer (110) une géométrie de contrôle à l'aide de la première quantité de pixels par l'adaptation d'au moins un élément de géométrie aux pixels de la première quantité de pixels,
f) déterminer (112) une deuxième quantité de pixels autour du point de départ, la deuxième quantité de pixels reproduisant la géométrie de la zone partielle au niveau de la géométrie de contrôle,
g) insérer la deuxième quantité de pixels dans au moins une quantité cible de pixels,
h) afficher (114) les pixels de la quantité cible de pixels dans la représentation d'objet sur ledit au moins un moyen d'affichage,
i) recevoir (116) au moins une deuxième entrée utilisateur après l'affichage (114) des pixels de la quantité cible de pixels dans la représentation d'objet sur ledit au moins un moyen d'affichage, la deuxième entrée utilisateur indiquant si les pixels affichés rendent correctement la géométrie de la zone partielle de l'objet,
j) si la deuxième entrée utilisateur indique que la géométrie est rendue correctement, déterminer (118) au moins une dimension de la géométrie et sortir la dimension,
k) si la deuxième entrée utilisateur indique que la géométrie n'est pas rendue correctement, répéter les étapes c) à i).

2. Procédé selon la revendication 1, **caractérisé en ce que** la détermination de la deuxième quantité de pixels présente la détermination de valeurs de référence au moins d'un deuxième paramètre pour des pixels autour de la géométrie de contrôle, les deuxièmes paramètres respectifs des pixels de la deuxième quantité de pixels correspondent aux valeurs de référence déterminées.

3. Procédé selon l'une quelconque des revendications précédentes, **caractérisé en ce que** pour indiquer que la géométrie n'est pas rendue correctement, la deuxième entrée utilisateur spécifie au moins une autre position de la représentation d'objet comme point de départ.

4. Procédé selon l'une quelconque des revendications précédentes, **caractérisé en ce que** pour indiquer que la géométrie n'est pas rendue correctement, la deuxième entrée utilisateur définit l'élément de géométrie de sorte que lors de la détermination de la géométrie de contrôle seul l'élément de géométrie défini par la deuxième entrée utilisateur est pris en compte.

5. Procédé selon l'une quelconque des revendications précédentes, **caractérisé en ce que** dans un passage par les étapes c) à i), la séquence des étapes e), f) et g) est parcourue au moins deux fois.

6. Procédé selon l'une quelconque des revendications précédentes, **caractérisé en ce que** la détermination de la première quantité de pixels est abandonnée dès qu'un nombre de pixels dans la première quantité de pixels atteint un nombre prédéfini de pixels.

7. Procédé selon l'une quelconque des revendications précédentes, **caractérisé en ce que** la détermination de la géométrie de contrôle présente les étapes suivantes consistant à :
p) déterminer un élément de géométrie,
q) adapter l'élément de géométrie aux pixels de la quantité cible de pixels par l'application d'un procédé d'ajustement,
r) déterminer au moins un écart de l'élément de géométrie adapté par rapport aux pixels de la quantité cible de pixels,
dans lequel la séquence des étapes p) à r) est répétée pour au moins deux éléments de géométrie,
dans lequel l'élément de géométrie adapté ayant le plus petit écart déterminé est défini en tant que géométrie de contrôle.

8. Procédé selon la revendication 7, **caractérisé en ce que** la détermination de l'écart de l'élément de géométrie adapté présente les étapes suivantes consistant à :
u) déterminer comme erreur de position un carré moyen de la distance de l'élément de géométrie adapté de la quantité cible de pixels,
v) déterminer comme erreur directionnelle un sinus quadratique moyen d'une différence de direction entre une normale de la géométrie de consigne adaptée et la quantité cible de pixels,
w) déterminer un produit de l'erreur de position et de l'erreur directionnelle,
x) pondérer le produit par un facteur de pondération défini, le facteur de pondération dépendant de l'élément de géométrie,
y) définir le produit pondéré comme un écart de l'élément de géométrie adapté.

9. Procédé selon l'une quelconque des revendications précédentes, **caractérisé en ce qu'**après l'exécution de l'étape g), des pixels sont supprimés sélectivement de la quantité cible de sorte que les pixels restant dans la quantité cible des pixels sont répartis régulièrement dans l'espace.

10. Produit de programme informatique comprenant des instructions exécutables sur un ordinateur qui, lorsqu'elles sont exécutées sur un ordinateur, font que l'ordinateur exécute le procédé selon l'une quelconque des revendications précédentes.
